## Europäisches Patentamt
## European Patent Office
## Office européen des brevets

(19)

(11) Numéro de publication: **0 219 428 B1**

(12)
# FASCICULE DE BREVET EUROPEEN

(45) Date de publication du fascicule du brevet:
**18.01.89**

(51) Int. Cl.⁴: **B 23 B 49/02**

(21) Numéro de dépôt: **86402216.5**

(22) Date de dépôt: **07.10.86**

(54) **Ensemble de douille de fixation pour unité d'usinage.**

(30) Priorité: **16.10.85 FR 8515326**

(43) Date de publication de la demande:
**22.04.87 Bulletin 87/17**

(45) Mention de la délivrance du brevet:
**18.01.89 Bulletin 89/3**

(84) Etats contractants désignés:
**BE DE ES GB IT NL SE**

(56) Documents cités:
**DE-C- 416 576**
**US-A- 4 242 017**
**US-A- 4 332 066**
**US-A- 4 485 562**

(73) Titulaire: **AEROSPATIALE SOCIETE NATIONALE INDUSTRIELLE, 37, Boulevard de Montmorency, F-75781 Paris Cédex 16 (FR)**

(72) Inventeur: **Schaff Deleury, Marie-José, 16 rue Desprez, F-31400 Toulouse (FR)**
Inventeur: **Brail, Alain, 42 Allée du Vivarais, F-31770 Colomiers (FR)**

(74) Mandataire: **Barnay, André François, Cabinet Barnay 80 rue Saint-Lazare, F-75009 Paris (FR)**

# Description

La présente invention concerne les appareils automatiques utilisés dans l'industrie pour effectuer des opérations répétitives d'usinage au moyen d'unités de travail manipulées individuellement, et elle est plus particulièrement relative à un ensemble perfectionné pour faciliter la présentation et la mise en position de ces unités (US-A-4332066).

On utilise de façon extensive dans les chaînes automatisées de fabrication de pièces mécaniques pour différentes industries telles que l'automobile, l'aéronautique et autres, des installations automatiques conçues pour effectuer des opérations répétitives de perçage, fraisage, alésage, épinglage ou autres au moyen de plusieurs appareils, ou unités, qui sont manipulés pour être présentés et engagés dans des douilles de fixation elles-mêmes fixées au préalable sur un gabarit, ou grille, fixé contre la pièce à usiner afin d'effectuer sur celle-ci les opérations nécessaires.

Par exemple lorsque des pièces doivent être percées d'un grand nombre de trous suivant une disposition donnée, on fixe contre cette pièce une grille portant des douilles dans une disposition correspondante et un opérateur adapte des unités de perçage dans plusieurs de ces douilles et les déplace pour les adapter dans d'autres douilles au fur et à mesure que les différentes unités ont achevé leur cycle de travail, qui est commandé automatiquement.

Chaque unité comporte un nez qui doit être présenté devant une douille, centré, introduit et verrouillé dans celle-ci, habituellement en faisant tourner l'unité d'un quart de tour dans la douille.

L'automatisation de cette manipulation s'est heurtée à des difficultés dues d'une part à la géométrie interne des douilles actuelles qui empêche l'introduction du nez de l'unité lorsqu'un décalage, même minime, existe entre l'axe de l'unité et celui de la douille, cette dernière ne comportant pas de moyens de centrage, et d'autre part à des impossibilités de reprise dues à l'absence de positionnement fixe en rotation.

En outre, l'encombrement des douilles ne permet pas toujours de les disposer à l'emplacement de chaque trou lorsque ceux-ci sont trop rapprochés et il est en conséquence nécessaire d'utiliser plusieurs grilles successivement pour une même pièce, ce qui entraîne d'importantes manipulations, longues et pénibles, qui interrompent et ralentissent le cycle automatique.

L'invention a pour but de remédier à ces inconvénients en réalisant un ensemble comprenant en combinaison une douille adaptée pour coopérer avec des moyens prévus sur l'unité pour centrer celle-ci automatiquement et la verrouiller sur la douille, une telle unité comportant des moyens adaptés pour la centrer et la verrouiller sur ladite douille.

L'invention a pour objet à cet effet un ensemble comprenant en combinaison une douille de fixation pour recevoir le nez d'une unité d'usinage comportant un nez et un corps, et une telle unité, caractérisé en ce que la douille comporte à son embouchure d'entrée des moyens internes de guidage et des moyens externes d'accrochage et, intérieurement, des moyens de centrage du nez de l'unité d'usinage, ladite unité comportant des organes d'accrochage adaptés pour coopérer avec lesdits moyens d'accrochage de la douille et des moyens coulissants de verrouillage de ces organes.

Suivant une autre caractéristique de l'invention, lesdits moyens internes de guidage à l'embouchure d'entrée de la douille sont constitués par un chanfrein périphérique.

Suivant encore une autre caractéristique de l'invention, lesdits moyens externes d'accrochage sont constitués par un bourrelet radial externe délimité entre une surface chanfreinée formée sur la périphérie externe de l'embouchure de la douille, et une gorge périphérique formée dans la surface externe de la douille.

Suivant un mode de réalisation, lesdits moyens intérieurs de centrage sont constitués par une première portion de la surface interne de la douille à peu près cylindrique, ayant un premier diamètre au voisinage de l'embouchure d'entrée de la douille, suivie d'une seconde et d'une troisième portions de forme tronconique reliées par leur grande base, et une quatrième portion, à l'ouverture de sortie de la douille, cylindrique et ayant un second diamètre, un peu inférieur à celui de ladite première portion.

Suivant une autre caractéristique, le nez de l'unité comporte, à partir de son extrémité vers son corps, un chanfrein périphérique, une première partie ayant un diamètre égal à celui de ladite quatrième portion de la surface interne de la douille, une seconde partie ayant un diamètre égal à celui de ladite première portion de la surface interne de la douille; lesdits organes d'accrochage sont constitués par plusieurs pattes élastiques s'étendant axialement à partir du corps en direction de l'extrémité du nez, chacune desdites pattes étant pourvue à son extrémité distale de moyens adaptés pour coopérer avec lesdits moyens externes d'accrochage de la douille, et les moyens coulissants de verrouillage comprennent un manchon monté coulissant axialement sur le corps de l'unité et entourant lesdites pattes.

D'une façon avantageuse, lesdits moyens prévus aux extrémités desdites pattes pour coopérer avec les moyens externes d'accrochage de la douille sont constitués par une partie plus épaisse faisant saillie vers l'intérieur et vers l'extérieur et conformée pour coopérer d'une part avec ladite surface chanfreinée de l'embouchure de la douille et d'autre part avec ledit manchon coulissant sur le corps de l'unité.

La description qui va suivre en regard des dessins annexés à titre d'exemple non limitatif permettra de bien comprendre comment l'invention peut être mise en pratique.

La figure 1 est une vue d'ensemble en perspective montrant une pièce devant être percée d'une série de trous, sur laquelle est fixée une grille portant des douilles de fixation pour des unités de perçage, et la partie avant d'une unité.

La figure 2 est une vue en coupe longitudinale d'une douille faisant partie d'un ensemble suivant l'invention.

La figure 3 en est une vue en bout.

La figure 4 est une vue en coupe longitudinale de la partie avant d'une unité de perçage faisant partie d'un ensemble suivant l'invention.

Les figures 5 à 8 sont des vues en coupe longitudinale montrant les différentes phases de la mise en place d'une unité de perçage dans une douille de l'ensemble et son verrouillage sur celle-ci.

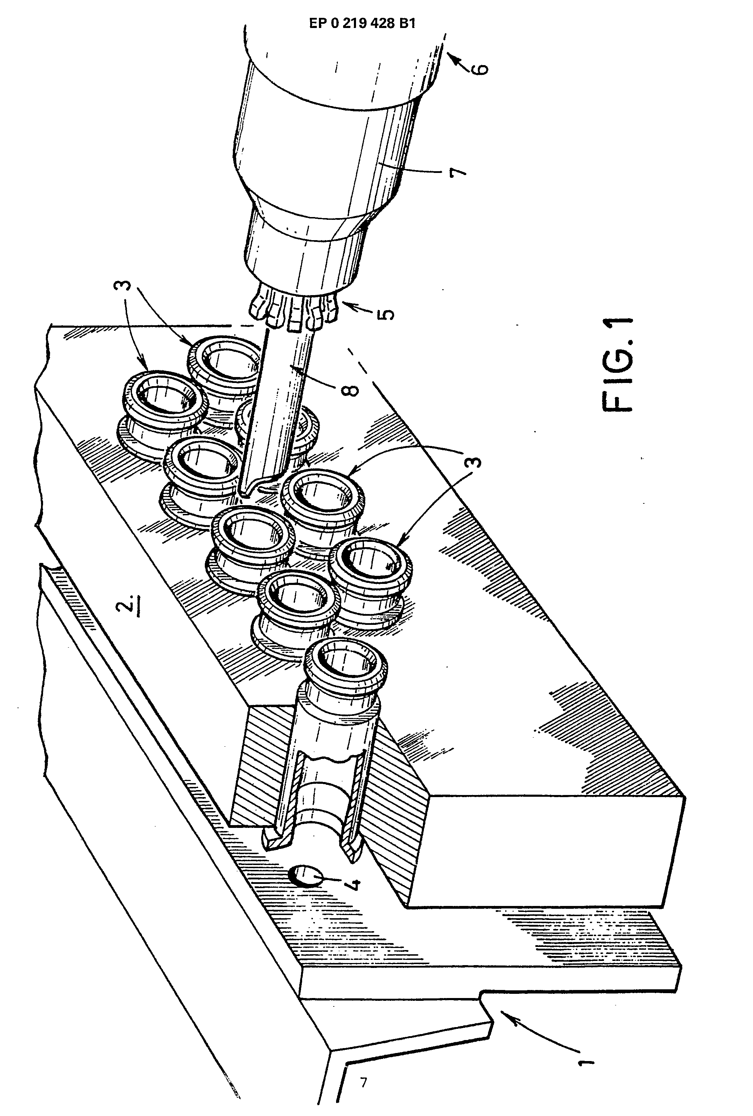

En se référant à la figure 1, on a représenté une pièce 1 à percer sur laquelle est fixé un gabarit ou grille 2 dans lequel sont fixées autant de douilles 3 qu'il y a de trous 4 à percer dans la pièce 1, et dans des positions correspondantes.

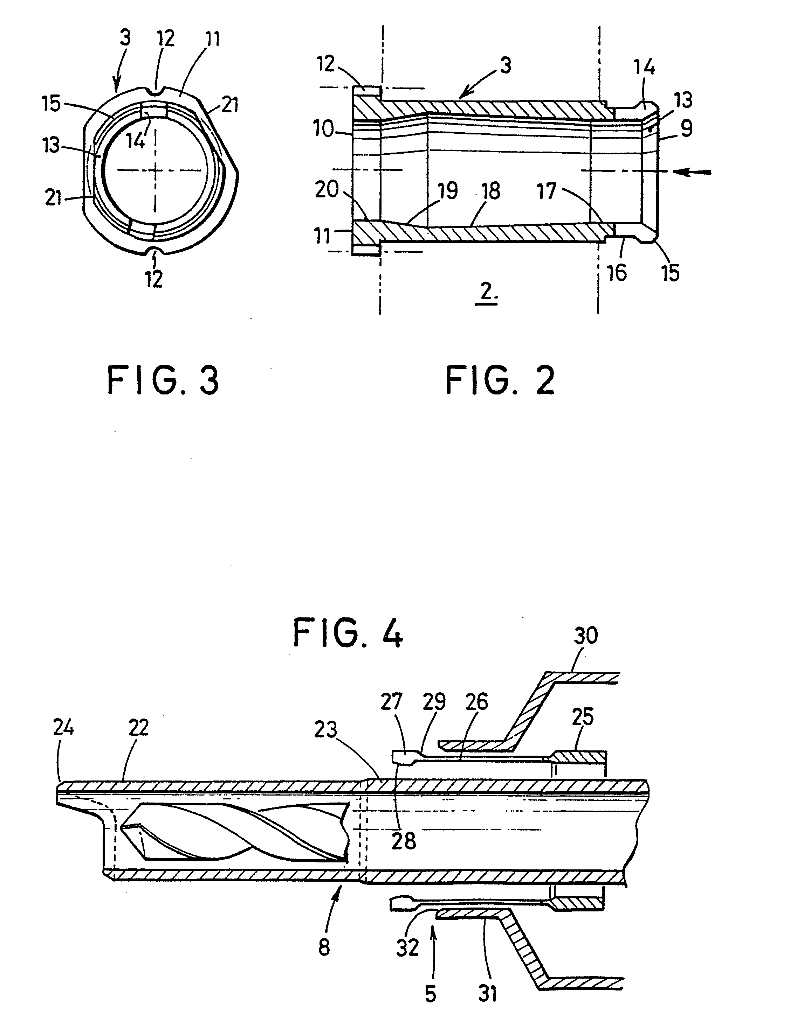

La référence 5 désigne la partie avant d'une unité de perçage 6 représentée partiellement et comportant un corps 7 et un nez 8 creux dans lequel coulisse l'outil de l'unité (figure 4). Comme connu en soi, le nez 8 présente à son extrémité une échancrure pour l'évacuation des copeaux.

Le nez est adapté pour pénétrer dans les douilles 3, lorsque l'unité est verrouillée sur la douille pour chaque opération.

Suivant l'invention, la douille 3 (figures 2 et 3) comporte un corps cylindrique ayant une extrémité d'entrée 9 et une extrémité de sortie 10 pourvue d'une collerette radiale 11. Elle est retenue dans la grille 2 et fixée en rotation par des vis non représentées disposées dans des échancrures 12 de la collerette 11. L'extrémité d'entrée 9 de la douille présente un chanfrein périphérique interne 13 et un bourrelet périphérique radial externe 14, délimité vers l'extrémité 9 par un chanfrein périphérique externe 15 et, à l'opposé, par une gorge 16.

La surface interne de la douille 3 présente une première portion cylindrique 17 ayant un premier diamètre, suivie d'une seconde portion 18 de forme tronconique divergente vers l'extrémité de sortie 10 et reliée par sa grande base à une troisième portion tronconique 19 qui converge vers l'extrémité 10 de la douille et suivie elle-même d'une quatrième portion formant une portée cylindrique 20 ayant un second diamètre, inférieur au diamètre de la première portion 17.

De préférence, la collerette 11 de l'extrémité de sortie de la douille et le bourrelet 14 à son extrémité d'entrée peuvent présenter des méplats ou pans coupés tels que 21 (figure 3) afin de permettre de disposer les douilles sur la grille 2 dans des positions très rapprochées.

Suivant l'invention, le nez 8 de l'unité présente une première portion 22 ayant un diamètre correspondant à celui de la portion cylindrique 20 de la douille, une seconde partie 23 d'un diamètre légèrement supérieur, égal à celui de la première portion cylindrique 17 à l'entrée de la douille.

L'extrémité avant du nez 8 présente un chanfrein périphérique externe 24 dont l'utilité apparaîtra dans la suite.

L'unité de perçage comporte un corps 7 dans lequel, comme connu en soi, le nez 8 est monté coulissant sur une faible course, et sur lequel est montée fixe une bague 25 comportant plusieurs pattes minces 26 venues de matière s'étendant dans le sens axial en direction de l'extrémité du nez 8. Chacune de ces pattes 26 présente à son extrémité une partie plus épaisse 27 présentant un chanfrein périphérique interne 28 et une rampe externe 29 inclinée vers l'extérieur.

Un manchon 30 monté coulissant sur le corps de l'unité présente un col 31 entourant les pattes 26, présentant un chanfrein périphérique interne 32 et ayant un diamètre intérieur un peu inférieur au diamètre externe délimité par les extrémités plus épaisses 27 des pattes, l'agencement étant tel que lorsqu'on fait coulisser le manchon 30 vers l'extrémité du nez, son chanfrein 32 vienne en contact avec les rampes 29 des pattes 26 pour forcer celles-ci élastiquement vers l'intérieur en les rapprochant radialement du nez 8.

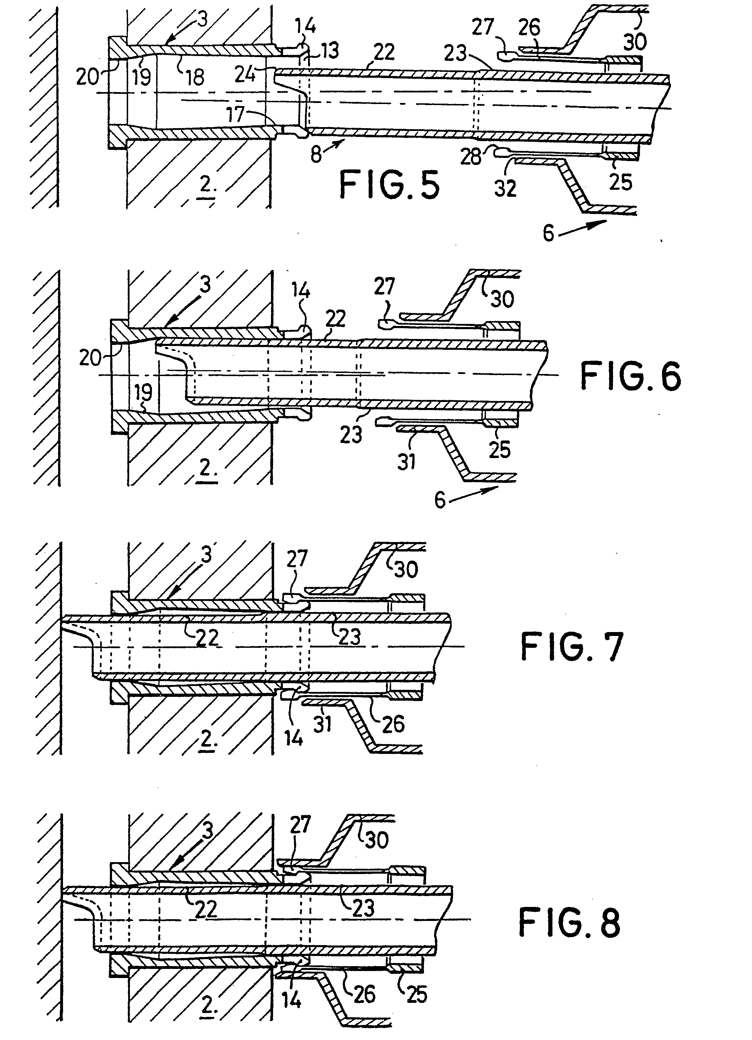

En se reportant maintenant aux figures 5 à 8, on décrira le fonctionnement de l'ensemble suivant l'invention.

Lorsque l'unité de perçage est présentée, par exemple par un robot, devant une douille 3 portée par la grille 2 avec un léger défaut d'alignement entre l'axe du nez et celui de la douille, le chanfrein 24 à l'extrémité du nez vient en contact avec le chanfrein 13 à l'extrémité d'entrée de la douille (figure 5) et glisse sur celui-ci, ce qui facilite l'introduction du nez dans la douille.

En continuant de se déplacer vers l'intérieur de la douille, le nez 8 de l'unité engage sa partie 22 ayant le diamètre le plus petit dans la première portion 17 de la douille et le chanfrein 24 du nez glisse sur la seconde portion tronconique 18 puis rencontre la troisième portion 19 dont la forme convergente vers l'extrémité de sortie de la douille ramène l'axe du nez en coïncidence avec celui de la douille (figure 7). La première partie 22 de diamètre réduit du nez s'engage alors dans la dernière portion cylindrique 20 de la douille dans laquelle elle est maintenue, tandis que sa seconde partie 23 de diamètre plus grand vient s'ajuster dans la première portion cylindrique 17 de la douille de sorte que le nez 8 de l'unité se trouve fermement maintenu dans la douille.

En continuant d'avancer, les chanfreins 28 des parties 27 des pattes glissent sur le chanfrein périphérique externe 15 de l'entrée de la douille et franchissent le bourrelet 14 pour venir se loger dans la gorge 16. Dans la position qui est alors celle représentée à la figure 7, on fait coulisser le manchon 30 vers l'avant de façon que son chanfrein 32, montant sur la rampe 29, ramène les parties élargies 27 vers l'intérieur pour les verrouiller fermement dans la gorge 16. L'unité se trouve ainsi solidement verrouillée sur la douille.

Le manchon coulissant 30 est par exemple commandé par un mécanisme approprié afin d'effectuer automatiquement son déplacement vers l'avant pour assurer le verrouillage de l'unité sur la douille, ce mécanisme ne faisant pas partie de l'invention ne sera pas décrit ici. Le déverrouillage de l'unité s'effectue par un mouvement de recul du manchon 30 qui libère les pattes 26 et leur permet de s'écarter élastiquement lorsque l'unité est tirée vers l'arrière.

Si on le désire, la douille peut être partiellement fendue pour lui conférer une légère élasticité et des butées peuvent être prévues sur sa périphérie externe pour immobiliser l'unité en rotation sur la douille. De même, il peut être prévu que la gorge 16 présente une géométrie appropriée et développante pour obtenir en plus du guidage du nez de l'unité un serrage sur la douille sur le nez d'autant plus fort que l'effort axial dû à la coupe est plus important.

## Revendications

1. Ensemble comprenant en combinaison une douille (3) de fixation pour recevoir le nez (8) d'une unité d'usinage, comportant un nez (8) et un corps (7), et une telle unité, caractérisé en ce que la douille (3) comporte à son embouchure d'entrée (9) des moyens internes de guidage (13) et des moyens externes (14) d'accrochage et, intérieurement, des moyens de centrage (18, 19) de l'unité d'usinage (6), cette unité comportant des organes d'accrochage (27) adaptés pour coopérer avec lesdits moyens d'accrochage (14) de la douille, et des moyens coulissants (30) de verrouillage de ces organes.

2. Ensemble suivant la revendication 1, caractérisé en ce que lesdits moyens internes de guidage à l'embouchure d'entrée (9) de la douille sont constitués par un chanfrein périphérique (23).

3. Ensemble suivant la revendication 1, caractérisé en ce que lesdits moyens externes d'accrochage sont constitués par un bourrelet radial externe (14) délimité entre une surface chanfreinée (15) formée sur la périphérie de l'embouchure de la douille et une gorge périphérique (16) formée dans la surface externe de la douille (3).

4. Ensemble suivant la revendication 1, caractérisé en ce que lesdits moyens intérieurs de centrage sont constitués par une première portion (17) de la surface interne de la douille à peu près cylindrique ayant un premier diamètre au voisinage de l'embouchure d'entrée (9), suivie d'une seconde et d'une troisième portions (18, 19) de forme tronconique, reliées par leur grande base et une quatrième portion (20) à l'ouverture de sortie (10) de la douille, cylindrique et ayant un second diamètre, un peu inférieur au premier.

5. Ensemble selon l'une quelconque des revendications 1 à 4, caractérisé en ce que le nez (8) de l'unité comporte à partir de son extrémité vers son corps, un chanfrein périphérique (24), une première partie (22) ayant un diamètre égal à celui de ladite quatrième portion (20) de la surface interne de la douille, une seconde partie (23) ayant un diamètre égal à celui de ladite première portion (17) de la surface interne de la douille; lesdits organes d'accrochage sont constitués par plusieurs pattes élastiques (26) s'étendant axialement à partir du corps en direction de l'extrémité du nez (8), chacune desdites pattes étant pourvue à son extrémité distale de moyens (27) adaptés pour coopérer avec lesdits moyens externes d'accrochage (14) de la douille et les moyens coulissants de verrouillage comprennent un manchon (30) monté coulissant axialement sur le corps de l'unité et entourant lesdites pattes (26).

6. Ensemble suivant la revendication 5, caractérisé en ce que lesdits moyens prévus aux extrémités desdites pattes pour coopérer avec les moyens externes d'accrochage de la douille sont constitués par une partie plus épaisse (27) faisant saillie vers l'intérieur et vers l'extérieur et conformée pour coopérer d'une part avec ladite surface chanfreinée (15) de l'embouchure de la douille (3) et d'autre part avec ledit manchon coulissant (30) sur le corps de l'unité.

7. Ensemble suivant la revendication 6, caractérisé en ce que ledit manchon coulissant (30) comporte un col (31) ayant un chanfrein périphérique interne (32) adapté pour coopérer avec lesdites parties plus épaisses (27) des pattes (26), l'agencement étant tel que lesdites pattes (26) sont déformées élastiquement vers l'intérieur lorsque ledit manchon (30) est amené par coulissement à recouvrir lesdites pattes.

8. Ensemble suivant la revendication 1, caractérisé en ce que chaque douille (3) comporte à son extrémité de sortie (10) une collerette radiale externe (11) de fixation, cette collerette et lesdits moyens d'accrochage (14) comportant des méplats ou pans coupés (21).

9. Ensemble suivant la revendication 1, caractérisé en ce que la douille (3) comporte une ou plusieurs fentes longitudinales partielles.

## Patentansprüche

1. Vorrichtung, bestehend aus der Kombination einer Spannbuchse (3) zur Aufnahme des Vorderteils (8) einer Bearbeitungseinheit, die ein Vorderteil (8) und einen Körper (7) aufweist, und einer solchen Einheit, dadurch gekennzeichnet, dass die Spannbuchse (3) an ihrer Eintrittsöffnung (9) innere Führungsmittel (13) und äussere Einrastmittel (14) und, in ihrem Inneren, Führungsmittel (18, 19) für die Bearbeitungseinheit (6) aufweist, wobei diese Einheit mit Einrastgliedern (27), die so ausgebildet sind, dass sie mit den Einrastmitteln (14) der Spannbuchse zusammenwirken, sowie mit Aufschiebeteilen (30) zum Verriegeln der Mittel versehen ist.

2. Vorrichtung nach Anspruch 1, dadurch gekennzeichnet, dass die inneren Führungsmittel an der Eintrittsöffnung (9) der Spannbuchse von einer umfangsseitig abgefasten Kante (13) gebildet sind.

3. Vorrichtung nach Anspruch 1, dadurch gekennzeichnet, dass die äusseren Einrastmittel von einem radial aussenseitigen Wulst (14) gebildet sind, der von einer an der Eintrittsöffnung der Spannbuchse umfangsseitig angeordneten abgefasten Fläche (15) und einer umlaufenden, an der Aussenfläche der Spannbuchse (3) angeordneten Hohlkehle (16) begrenzt ist.

4. Vorrichtung nach Anspruch 1, dadurch gekennzeichnet, dass die Führungsmittel im Inneren einen ersten, im wesentlichen zylindrischen Teilbereich (17) der Innenfläche der Spannbuchse mit einem ersten Durchmesser im an die Eintrittsöffnung (9) angrenzenden Bereich aufweisen, dem sich ein zweiter und dritter kegelstumpfförmiger Teilbereich (18, 19) anschliesst, die beide über ihre grosse Grundfläche miteinander verbunden sind, und dass ein vierter zylindrischer Teilbereich (20) an der Austrittsöffnung (10) der Spannbuchse mit einem zweiten Durchmesser vorgesehen ist, der gegenüber dem ersten geringfügig kleiner ist.

5. Vorrichtung nach einem der Ansprüche 1 bis 4, dadurch gekennzeichnet, dass das Vorderteil (8) der Einheit an seinem dem Körper abgewandten Ende eine umfangsseitig verlaufende Fase (24), ferner einen ersten Bereich (22), der einen dem vierten Teilbereich (20) der Innenfläche der Spannbuchse gleichen Durchmesser besitzt, und einen zweiten Bereich (23) aufweist, der einen dem ersten Teilbereich (17) der Innenfläche der Spannbuchse gleichen Durchmesser besitzt, wobei die Einrastglieder von mehreren elastischen Streifen (26) gebildet sind, die sich axial von dem Körper in Richtung zum Ende des Vorderteils (8) hin erstrecken, wobei jeder der Streifen an seinem fernen Ende mit Mitteln (27) versehen ist, die dazu eingerichtet sind, mit den äusseren Einrastmitteln (14) der Spannhülse zusammenwirken und wobei die Aufschiebeteile eine Hülse (30) umfassen, die axial verschiebbar auf dem Körper der Einheit angeordnet ist und die Streifen (26) umschliesst.

6. Vorrichtung nach Anspruch 5, dadurch gekennzeichnet, dass die an den Enden der Streifen vorgesehenen Mittel, die mit den äusseren Einrastmitteln der Spannbuchse zusammenwirken, von einer verstärkten Zone (27) gebildet sind, die eine Auskragung nach innen und aussen bilden und so gestaltet sind, dass sie einerseits mit der abgefasten Fläche (15) der Eintrittsöffnung der Spannbuchse (3) und andererseits mit der verschiebbaren Hülse (30) auf dem Körper der Einheit zusammenwirken.

7. Vorrichtung nach Anspruch 6, dadurch gekennzeichnet, dass die verschiebbare Hülse (30) mit einem Kragen (31) versehen ist, der eine innere, randseitig verlaufende Abfasung (32) aufweist, die so ausgebildet ist, dass sie mit den verstärkten Zonen (27) der Streifen (26) zusammenwirkt, wobei die Anordnung so gewählt ist, dass die Streifen (26) elastisch zur Innenseite hin verformt werden, wenn die Hülse (30) durch Verschiebung so verstellt wird, dass sie die Streifen übergreift.

8. Vorrichtung nach Anspruch 1, dadurch gekennzeichnet, dass jede Spannbuchse (3) an ihrer Ausgangsöffnung (10) einen radial äusseren Befestigungsflansch (11) trägt, wobei der Befestigungsflansch und die Einrastmittel (14) eine Abflachung oder eine schräge Kante (21) aufweisen.

9. Vorrichtung nach Anspruch 1, dadurch gekennzeichnet, dass die Spannbuchse (3) mit sich bereichsweise erstreckenden länglichen Schlitzen versehen ist.

## Claims

1. Assembly comprising, in combination, a fixing socket (3) adapted to receive the nose (8) of a machining unit, comprising a nose (8) and a body (7), and one such unit, characterised in that the socket (3) is provided at its mouth (9) with internal guide means (13) and external latching means (14) and, internally, with means (18, 19) for centring the machining unit (6), said unit being provided with latching members (27) adapted to cooperate with said latching means (14) of the socket, and being provided also with sliding means (30) for the locking of said latching members.

2. Assembly according to claim 1, characterised in that said internal guide means at the mouth (9) of the socket comprise a peripheral chamfer (13).

3. Assembly according to claim 1, characterised in that said external latching means comprise an external radial rib (14) defined between a chamfered surface (15) formed on the periphery of the mouth of the socket and a peripheral channel (16) formed in the external surface of the socket (3).

4. Assembly according to claim 1, characterised in that said internal centring means comprise a first portion (17) of the internal surface of the socket which is substantially cylindrical and has a first diameter substantially equal to the diameter of the mouth (9), followed by tapering second and third portions (18, 19) which are connected at their respective larger diameter ends, and a fourth portion (20) at the exit opening (10) of the socket, said fourth portion being cylindrical and having a second diameter which is slightly smaller than that of said first portion.

5. Assembly according to any one of claims 1 to 4, characterised in that the nose (8) of the machining unit comprises, from its free end towards its body, a peripheral chamber (24), a first part (22) having a diameter equal to that of the said fourth portion (20) of the internal surface of the socket, a second part (23) having a diameter equal to that of the said first portion (17) of the internal surface of the socket; said latching members comprising a plurality of resilient tongues (26) extending axially from the body in the direction towards the free end of the nose (8), each of the said tongues being provided at its distal end with means (27) adapted to cooperate with said external latching means (14) of the socket, and the sliding means for locking comprising a sleeve (30) mounted to be axially slidable on the body of the unit and surrounding the said tongues (26).

6. Assembly according to claim 5, characterised in that said means provided at the ends of the said tongues for cooperation with the external latching means of the socket comprises a thicker part (27) prominent both radially outwardly and radially inwardly and shaped to have one part thereof cooperable with the said chamfered surface (15) of the mouth of the socket (3) and another part thereof cooperable with said sliding sleeve (30) on the body of the unit.

7. Assembly according to claim 6, characterised in that said sliding sleeve (30) includes a neck (31) having an internal peripheral chamfer (32) adapted to cooperate with said thicker part (27) of the tongues (26), the cooperation being such that said tongues (26) are deformed elastically radially inwards when said sleeve (30) is caused by sliding to mask said tongues.

8. Assembly according to claim 1, characterised in that each socket (3) has at its exit end (10) an external radial fixing collar (11), said collar and said latching means (14) having flat zones or surfaces (21).

9. Assembly according to claim 1, characterised in that the socket (3) comprises one or more partial longitudinal slots.

FIG.1

EP 0 219 428 B1

FIG. 3

FIG. 2

FIG. 4

FIG.5

FIG.6

FIG.7

FIG.8

11